# EUROPÄISCHE PATENTSCHRIFT

(11) **EP 0 385 386 B1**
(45) Veröffentlichungstag und Bekanntmachung des Hinweises auf die Patenterteilung: **04.08.1993**
(21) Anmeldenummer: 90103778.8
(22) Anmeldetag: 27.02.1990
(51) Int. Cl.: G01B 11/26, G01D 5/34

(54) **Verfahren zur Messung eines Drehwinkels und Drehwinkelmesser**
Method and device to measure a rotation angle
Méthode et dispositif pour la mesure d'un angle de rotation

(30) Priorität: 03.03.1989 DE 3906777
(43) Veröffentlichungstag der Anmeldung: 05.09.1990
(73) Patentinhaber: Krieg, Gunther, Prof.Dr.Ing., D-76227 Karlsruhe (DE)
(72) Erfinder: Deppisch, Bertold Prof.Dr.rer.nat., D-7507 Pfinztal 2 (DE); Helget, Werner, D-7500 Karlsruhe 1 (DE); Krieg, Gunther Prof. Dr., D-7500 Karlsruhe 41 (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- WO-A-88/04765
- US-A- 3 809 477
- MEASUREMENT AND CONTROL,Band 16, Nr. 10, Oktober 1983, Seiten 385-391, Dorking, GB; T.P. FLANAGAN: "Electro-optics in instrumentation - the impending revolution (part 2)"

## Beschreibung

Die Erfindung betrifft ein Verfahren zum Messen eines Drehwinkels, wobei mindestens ein zu seiner Drehachse radiales erstes optisches Gitter relativ zu einem parallel zu diesem angeordneten stationären weiteren optischen Gitter verschwenkt wird und wobei durch diese in einem Überlappungsbereich derselben hindurchtretendes Licht detektiert wird, sowie einen Drehwinkelmesser mit mindestens zwei optischen Gittern, von denen eines um eine durch ein Zentrum verlaufende Drehachse relativ zum anderen Gitter verschwenkbar ist und wobei die Winkelstellung des ersten optischen Gitters gemessen werden soll, und mit mindestens einer Lichtquelle und mindestens einem Fotodetektor, wobei Licht der Lichtquelle durch einen Überlappungsbereich beider Gitter zum Detektor gelangt.

Gattungsgemäße optische Drehwinkelmesser sind an sich bekannt. Sie weisen ein um ihr Zentrum gegenüber einem weiteren Gitter oder Schlitzen verschwenkbares strahlenförmiges optisches Gitter auf. Die bekannten Drehwinkelmesser oder -geber stellen hohe Anforderungen. Sie sind daher gegen Umgebungseinflüsse empfindlich, insgesamt nicht preiswert und für den Masseneinsatz nicht geeignet. Ferner ist ihr Auflösungsvermögen infolge von Beugungseffekten stark begrenzt, da diese Effekte bei Strichstrukturen im Bereich einiger µm bereits wirksam werden. Außerdem werden höchste Anforderungen an die Präzision der Achsjustierung und der sonstigen Geometrieparameter gestellt.

Derartige Drehwinkelgeber werden zur Messung der Drosselklappenstellung in Fahrzeugen mit Katalysator zur Optimierung von dessen Wirkung verlangt. Es sind hier Winkelgenauigkeiten von einigen Hundertstel Grad erforderlich. Es ist ersichtlich, daß in solchen Fällen ein preiswertes Massenprodukt erforderlich ist, das dennoch gegenüber externen Störeinflüssen möglichst unempfindlich ist.

Die Literaturstelle Measurement and Control, Band 16, Nr. 10, Oktober 1983, Seiten 385 bis 391, Dorking, GB; T.P. Flanagan: Electro-optics in instrumentation - the impending revolution (part 2) beschreibt einen Drehwinkelmesser bzw. ein Verfahren zur Messung eines Drehwinkels mit zwei radialen optischen Gittern, deren Mittelpunkte oder Symmetriezentren innerhalb des diese umgebenden Überlappungsbereiches der beiden Gitter liegen.

Nachteilig ist hierbei, daß die dabei entstehende Moiré-Figur in ihrer Gestalt davon abhängt, wie genau die Drehzentren übereinstimmen bzw. ihre Orte relativ zueinander genau definiert sind und nicht Toleranzen unterliegen, wie dies in der praktischen Ausgestaltung in der Regel der Fall ist. Bei Abweichungen entsteht jedesmal eine anders geartete Moiré-Figur.

Der Erfindung liegt daher die Aufgabe zugrunde, ein Verfahren zum Messen von Drehwinkeln anzugeben und einen Drehwinkelgeber vorzuschlagen, die eine preiswerte Drehwinkelmessung bei hoher Unempfindlichkeit gegen äußere Einflüsse, geringen Anforderungen und Herstellungstoleranzen, insbesondere hinsichtlich der Positionierung der Drehzentren sowie eine hohe Auflösung und damit Meßgenauigkeit der Drehwinkelstellung ermöglichen.

Erfindungsgemäß wird die genannte Aufgabe bei einem Verfahren der eingangs genannten Art dadurch gelöst, daß die Zentren der beiden optischen Gitter auf gegenüberliegenden Seiten des Überlappungsbereiches liegen. Ein Drehwinkelmesser der gattungsgemäßen Art ist erfindungsgemäß dadurch ausgestaltet, daß die Zentren der beiden optischen Gitter auf gegenüberliegenden Seiten des Überlappungsbereichs liegen.

Bevorzugte Weiterbildungen sehen vor, daß ein auf der Verbindungsachse der beiden Zentren der beiden Gitter liegender Teil des Überlappungsbereichs durch mindestens einen Fotoempfänger beobachtet wird und daß die elektrischen Ausgangssignale des oder der Fotoempfänger(s) digitalisiert werden, wobei insbesondere vorgesehen sein kann, daß die empfangenen Digitalimpulse bis zur Bestimmung der Endstellung der messenden Drehbewegung aufaddiert werden. Weitere Ausgestaltungen sehen vor, daß die Digitalimpulse durch die Spitzenwerte der Ausgangssignale der Fotoempfänger erzeugt werden, daß Digitalimpulse durch definierte Werte des Ausgangssignals des Fötoempfängers feststellende Schmitt-Trigger erzeugt werden und daß die optischen Gitter identisch ausgebildet sein können, wenn sie auch grundsätzlich unterschiedliche Gitterkonstanten aufweisen können.

Der erfindungsgemäße Drehwinkelgeber ist in bevorzugter Weiterentwicklung dadurch ausgestaltet, daß über den Überlappungsbereichen der optischen Gitter eine Blende angeordnet ist. Andere erfindungsgemäße Ausbildungen sehen vor, daß dem bzw. den Fotoempfänger(n) eine Auswerteelektronik nachgeordnet ist und/oder daß die Auswerteelektronik eine Einrichtung zur Ableitung von Digitalsignalen vom Ausgangssignal des bzw. der Fotoempfänger(s) aufweist.

In Weiterbildung kann vorgesehen sein, daß dem bzw. den Fotoempfänger(n) Spitzenwertdetektoren nachgeordnet sind. Eine erste Digitalisierung des erhaltenen analogen, sinusförmigen Signals kann durch ein oder mehrere Spitzenwertdetektoren erfolgen.

Zur Verbesserung der Auflösung und Bestimmung der Drehrichtung des Drehwinkelgebers zeichnen sich weitere Ausgestaltungen dadurch aus, daß ein weiteres zu einem ersten der Gitter koaxiales Gitter, das zu dem genannten Gitter versetzt ist, synchron mit diesem ersten Gitter relativ zum anderen zweiten Gitter verschwenkt wird, bzw. daß mit einem optischen Gitter ein weiteres optisches Gitter vorhanden ist, das koaxial zu diesem angeordnet, aber relativ zu diesem winkelmäßig versetzt ist. Hierzu ist also neben einem äußeren Strichkranz ein zusätzlicher innerer Strichkranz angebracht. Dabei kann insbesondere vorgesehen sein, daß das weitere Gitter um ein ein Viertel Strichabstand relativ zum mit ihm koaxialen Gitter vor- bzw. nachgeführt wird, bzw. daß die beiden koaxialen Strichgitter um 1/4 Strichabstand zueinander versetzt sind. Die beiden Strichkränze weisen also bei einem angenommenen Strichabstand von 0,2 Grad einen Versatz der Striche von 0,05 Grad auf, wobei die Striche des inneren Strichkranzes um 0,05 Grad nacheilend, oder voreilend gegenüber dem äußeren Strichkranz sein können. Die beiden Strichkränze werden von ein und demselben Strichkranzsegment des anderen in einer parallelen Ebene befindlichen Gitters überdeckt, so daß zwei untereinander liegende Halbrauten entstehen. In Abhängigkeit vom Versatz der Strichkränze zueinander weisen die beiden Halbrauten einen Versatz ihrer Helligkeitszustände von 0,05 Grad zueinander auf. Zur Erfassung der Helligkeitsänderungen der Rauten muß die Nachweiselektronik für jede Halbraute separat aufgebaut werden. In einer nachfolgenden gemeinsamen Elektronik werden die Signale der Nachweiszweige zusammengeführt und Digitalimpulse zur Zählung der Winkelschritte und der Drehrichtung generiert.

Gemäß einer weiteren bevorzugten Ausgestaltung ist vorgesehen, daß die optischen Strichmarkierungen auf Glasträgern ausgebildet sind, wobei die Strukturen durch Ätzen oder durch lithographisches Verfahren, mit vorzugsweise Aufbringen von CrO₂, erzeugt werden können.

Weitere Vorteile und Merkmale der Erfindung ergeben sich aus den Ansprüchen und aus der nachfolgenden Beschreibung, in der ein Ausführungsbeispiel der Erfindung unter Bezugnahme auf die Zeichnung im einzelnen erläutert ist. Dabei zeigen:
- Figur 1: Eine Anordnung der sich überlappenden Strahlenkränze in Explosionsdarstellung;
- Figur 2: eine Aufsicht auf unmittelbar hintereinander angeordnete Strahlenkranzausschnitte;
- Figur 3: eine Seitenansicht entsprechend III der Figur 2 mit Lichtquelle und -empfänger sowie nachfolgender elektronischer Schaltung;
- Figur 4: das Bild zweier hintereinander angeordneter Strahlenkranzbereiche bei Verdunklung im Zentrum;
- Figur 5: ein Bild entsprechend Figur 4 bei Verdrehung des einen Strahlenkranzausschnittes zum anderen um eine halbe Periode der Strahlenanordnung mit hierdurch bewirkter Aufhellung des Mittelbereichs;
- Figur 6: Diagrammdarstellungen der im Zuge der elektronischen Auswertung von aufgenommenen Bildern entsprechenden Figuren 4 und 5 durch die Schaltung der Fig.3 gewonnenen Signale;
- Figur 7: Diagramme der erhaltenen Signale bei einer Scheibe mit um 1/4 Strichabstand zueinander versetzten konzentrischen äußeren und inneren Strichgittern;
- Figur 8: eine schematische Darstellung der Halbrauten bei konzentrisch äußeren und inneren Strichgittern entsprechend Fig.1;
- Figur 9: eine Beobachtungsanordnung für die Ausgestaltung der Figuren 1 und 8 mit Lichtleitern;
- Figur 10: eine Anordnung mit zwei auf einer Scheibe übereinander angeordneten Strichkranz-Segmenten mit radial zueinander versetzten Mittelpunkten;
- Figur 11: eine Anordnung mit zwei auf einer Scheibe nebeneinander angeordneten Strichkranz-Segmenten mit angular versetzten Mittelpunkten; und
- Figur 12: eine Anordnung mit mit senkrechtem Abbruch zueinander angeordneten Strichmustern.
- Figur 13: einen schematischen Ausschnitt aus dem optischen Gitter mit einer verlängerten transparenten Lücke zur Erkennung einer Marke zwecks Bestimmung eines absoluten Drehwinkels;
- Figur 14: eine Detektionsanordnung zur Detektion der verlängerten Lücke; und
- Figur 15 a,b: einen schematischen Ausschnitt aus dem optischen Gitter mit unterschiedlichen Gitterabständen zur Ausschaltung von Paralaxeneffekten.

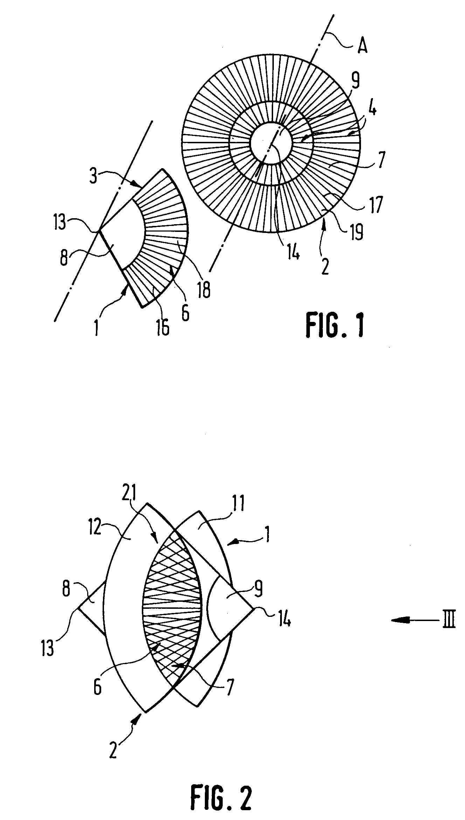

Erfindungsgemäß werden zwei Scheiben 1,2 vorgesehen, die in Ringbereichen 3,4 mit einem Strahlenkranzringausschnitt 6 oder einem vollen Strahlenkranz 7 versehen sind. Der mittlere Bereich 8,9 ist ebenso wie ein Randbereich 11,12 (Figur 2; in Figur 1 aus Verdeutlichungsgründen nicht dargestellt) geschwärzt, wobei die flächige Schwärzung der Bereiche 8,9, 11,12 ebenfalls aus zeichnerischen bzw. Reproduktionsgründen im Rahmen der Patentanmeldeschrift bei den Figuren nicht vorgenommen wurde; gegebenenfalls kann auch die Darstellung der Figuren 1 und 2 als Negativdarstellung der tatsächlich verwendeten Scheiben 1,2 verstanden werden.

Die Strahlenkranzabschnitte 6,7 weisen eine Vielzahl radial von Zentren 13,14 ausgehender Striche 16,17 mit dazwischen befindlichen lichtdurchlässigen Zwischenräumen 18,19 bzw. vice versa auf. Die Winkelperiode der Striche 16,17 beträgt bei einer bevorzugter Ausgestaltung 0,2°, das heißt, der Winkelabstand vom Beginn eines Striches bis zum Beginn des nächsten Striches beträgt 0,2°. Obwohl das Verhältnis von Strichstärke und lichtem Abstand zwischen zwei Strichen unkritisch ist und durchaus einige Bruchteile abweichen kann, wird vorzugsweise vorgesehen, daß das Verhältnis 1 beträgt, da hierdurch ein optimaler Kontrast zwischen um eine halbe Periode verdrehter Winkelstellungen und damit ein hohes Nutzsignal erreichbar ist. Die radialen Dimensionen der Scheiben liegen in der Größenordnung von wenigen Zentimetern, vorzugsweise von weniger als 3 cm. Strichabstände liegen dann in der Größenordnung von einigen Hundertstel Millimetern oder einigen -zig Mikrometern, wodurch störende Beugungserscheinungen alleine aufgrund des Abstandes der Striche einer Scheibe noch vermieden sind.

Wesentlich ist, daß der Überlappungsbereich 21 der Strichmuster 6,7 der beiden Scheiben 1,2 zwischen den beiden Zentren 13,14 der Scheiben 1,2 liegt. Eine der beiden Scheiben, in der Ausführungsform der Figur 1 die als Vollkreis ausgebildete Scheibe 2, ist drehbar um eine durch ihr Zentrum 14 gehende Achse A.

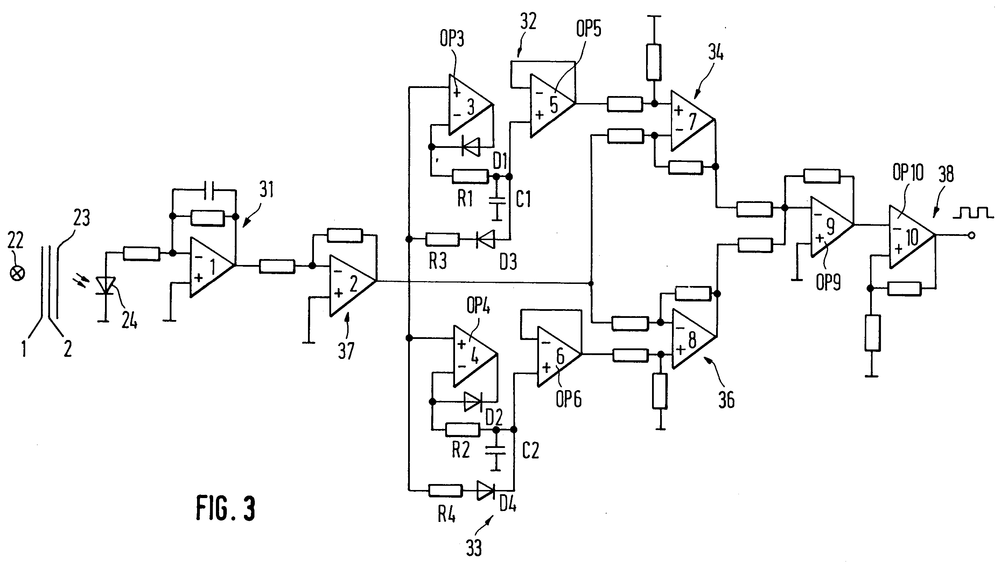

Vor der Anordnung der beiden Scheiben 1,2 ist eine Lichtquelle 22 zur Beleuchtung angeordnet. Auf einer Seite der Scheiben 1,2 befindet sich eine Blende 23, die lediglich Licht in einem grundsätzlich auf der Verbindungsachse der beiden Zentren 13,14 liegenden Mittenbereich hindurchläßt, wobei die Einstellung allerdings nicht kritisch ist. Hinter den Scheiben 1,2 (von der Lichtquelle 22 aus gesehen) befindet sich ein Fotoempfänger 24, an den sich eine Verarbeitungselektronik mit einem den Fotostrom in eine Spannung umwandelnden Stromspannungswandler 31, Spitzenwertdetektoren bzw. Speicherschaltungen 32,33 sowie Differenzverstärkern anschließen (Fig.3).

Die Helligkeitsänderungen des Überlappungsbereichs 21 in Form einer Raute werden durch einen Fotodetektor 24, wie ein Fotoelement oder eine Fotodiode aufgenommen. Der nachfolgende Operationsverstärker ist durch den in seinem negativen Eingang zurückführenden Zweig parallel geschalteten Kondensator und Widerstand als Stromspannungswandler 31 geschaltet. Am Ausgang des Stromspannungswandlers 31 liegt eine von einer Wechselspannung überlagerte Gleichspannung an. Der Gleichspannungsanteil beruht darauf, daß die Verdunklung im Überlappungsbereich 21 nicht den gesamten Detektionsspalt ausfüllt und somit immer eine Grundhelligkeit vom Empfänger detektiert wird. Die Wechselspannung entsteht aufgrund des Relativverschwenkens der Strichkranzscheiben 1,2 zueinander, wodurch der Überlappungsbereich seine Helligkeit verändert. Es können relativ große mechanische Fertigungstoleranzen zugelassen werden. Hierdurch kann zwar der rautenförmige Überlappungsbereich aus dem Bereich des Detektionsschlitzes herauswandern, was zu einer Veränderung des Gleichspannungsanteils und zu einer Veränderung der Wechselspannungsamplitude führt. Diese können durch die nachfolgende Schaltung berücksichtigt werden. Es kann allerdings bei relativ hohen Fertigungstoleranzen kein fester Schwellwert zur Digitalisierung der Wechselspannung verwendet werden. Wenn eine solche Auswertung vorgenommen werden soll, so müßten die Fertigungstoleranzen relativ eng gefaßt werden.

Dem Stromspannungswandler 31 ist ein invertierender Verstärker 37 - durch Rückführung des Ausgangs auf den negativen Eingang über einen Widerstand - nachgeschaltet. Durch den Widerstand ist die Verstärkung derart gewählt, daß eine Wechselspannung mit einer Amplitude in einem vorgegebenen Bereich, beispielsweise von 1,5 Volt, erreicht wird. Deren Extrema werden durch die nachfolgenden, die Operationsverstärker OP3 bis OP6 aufweisenden Speicherschaltungen 32,33 erfaßt. Die positiven Eingänge der Operatoren OP3, OP4 folgen dem Ausgang des Verstärkers 37. Die Ausgänge der Operatoren OP3, OP4 sind über jeweils eine Diode D1, D2 und einem Widerstand R1, R2 mit einem Ladekondensator C1, C2 verbunden, wobei die Dioden D1, D2 relativ zu dem ihnen zugeordneten Operator OP3, OP4 in verschiedenem Sinne angeordnet sind. Der mit dem Ausgang der Operatoren OP3, OP4 verbundene Anschluß des Kondensators C1, C2 ist weiterhin über in entsprechenderweise unterschiedlich angeordnete Dioden D3, D4 und Widerstände R3, R4 mit dem Ausgang des Verstärkers 37 verbunden.

Die Spannungen der Ladekondensatoren C1, C2 liegen über Impedanzwandler OP5 und OP6 an den positiven Eingängen der Differenzverstärker 34,36 an, an deren negativen Eingängen weiterhin der Ausgang des Verstärkers 37 anliegt. Der Operator OP9 addiert die beiden Ausgangsspannungen der Differenzverstärker 34,36, wodurch sich am Ausgang des Operators OP9 die gewünschte Wechselspannung ohne Gleichspannungsanteil ergibt. Der Operator OP10 arbeitet als Schmitttrigger 38 und erzeugt eine Rechteckspannung mit Werten bei ca. 75 % der positiven und negativen Maxima der Wechselspannung des Verstärkers 37.

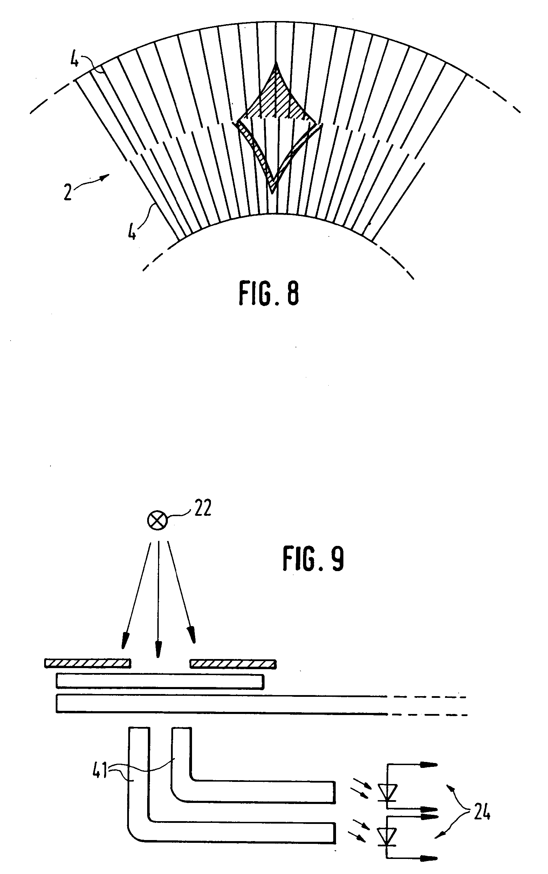

Wenn auf einer Scheibe 1,2 zwei konzentrische optische Strichgitter angeordnet sind, die winkelmäßig asymmetrisch zueinander versetzt sind, beispielsweise um 1/4 Strichabstand, so müssen jedem Gitter auf der Scheibe ein Detektor zugeordnet sein, denen jeweils die beschriebene elektronische Schaltung nachgeordnet ist (Fig.1,8).

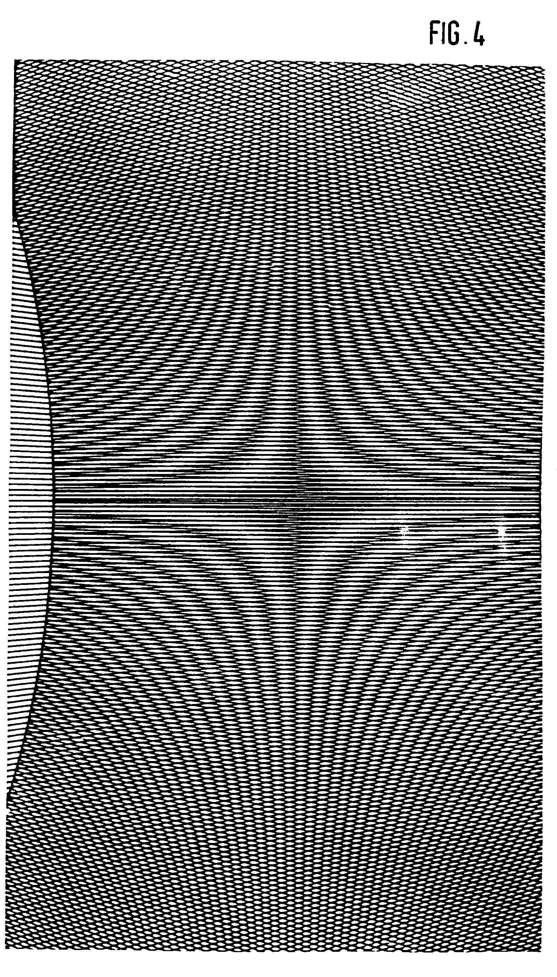

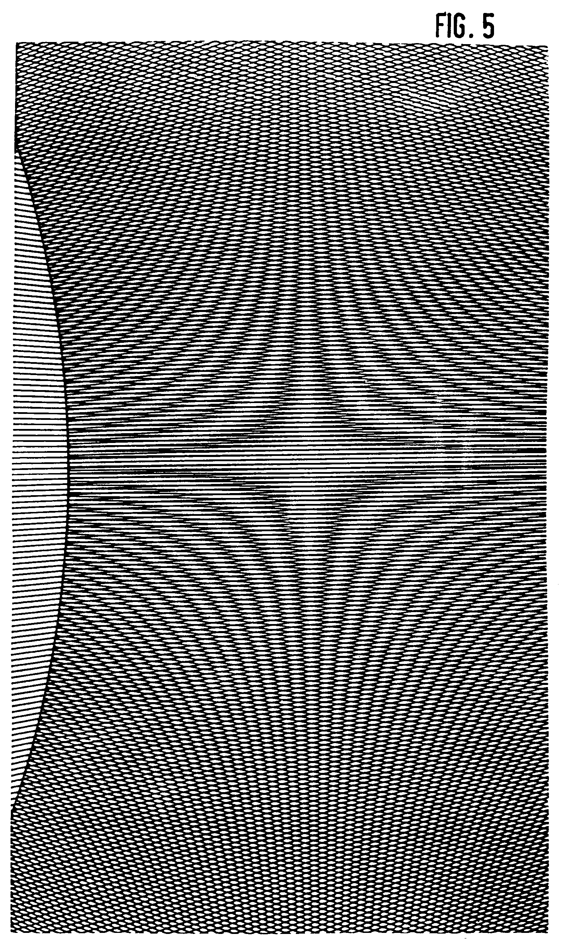

Durch die beschriebene Hintereinanderanordnung der beiden Scheiben 1,2 mit zwischen ihren Zentren 13,14 befindlichen Überlappungsbereich 21 ergibt sich bei Beleuchtung ein im Zentrum rautenförmiges Muster, wie dies in den Figuren 4 und 5 erkennbar ist. Bei einer Winkelstellung der verschwenkbaren Scheiben 2 ergibt sich im Zentrum der Rautenanordnung, der im Öffnungsbereich der Blende 23 liegt und durch den Fotoempfänger 24 "gesehen" wird, ein verdunkelter Bereich (Fig. 4). Wenn die drehbare Scheibe 2 ihre Zentrumsachse A,14 über eine halbe Strichperiode (also bei einer Strichperiode von 0,2 Winkel-Grad über 0,1°) verschwenkt wird, hellt sich das Zentrum des Rautenmusters auf, wie dies in der Figur 5 dargestellt ist. Dieser Helligkeitswechsel ergibt einen einer Gleichspannung überlagerten, sinusförmigen Fotostrom, der, wie weiter unten beschrieben wird, elektronisch verarbeitet und ausgewertet werden kann.

Der wesentliche Vorteil der erfindungsgemäßen Anordnung liegt darin, daß ein gegenüber den Strichmustern makroskopisches Zentrum mit großem Kontrast bei der beschriebenen Veränderung der Winkelstellung der Scheiben zueinander geschaffen wird. Mit makroskropischem Zentrum ist hier gemeint, daß dieses beobachtete Zentrum eine zweiachsige, also vierzählige Drehsymmetrie aufweist gegenüber einem lediglich einachsigen Hell-Dunkelmuster. Die erfindungsgemäße Anordnung weist hierdurch nämlich wesentlich größere Toleranzen hinsichtlich Einstellung und Anordnung der beiden Zentren der Scheiben 1,2 sowie der Blende 23 auf, wobei darüberhinaus, wenn vor einer Winkelverstellung der schwenkbaren Scheibe 2 deren Ausgangsstellung zunächst als Nullwert erfaßt wird, dieser ebenfalls unkritisch ist.

Die Helligkeitsänderung der zentralen Raute, wie sie aus den Figuren 4 und 5 entnehmbar ist, kann leicht detektiert werden und setzt keine genaue Justierung der Strichmuster voraus.

Die, wie gesagt, sinusförmigen Intensitäts- und damit Fotostromänderungen werden durch den Stromspannungswandler 31 in eine eine Gleichspannung überlagernde sinusförmige Wechselspannung umgewandelt, deren Periode einer Winkeländerung entsprechend der Periode des Strichmusters, also dem Abstand der vorderen Kante eines Striches zur vorderen Kante des nächsten Striches und im angenommenen Beispiel 0,2 Winkel-Grad entspricht. Maxima und Minima der gleichspannungsüberlagerten Sinusspannung oder positive oder negative Maxima werden durch die Speicherschaltungen 32,33 oder zwei Spitzenwertdetektoren detektiert.

Zur Erfassung des Wechselspannungsmaximums lädt der Operator OP3 über die Diode D1 und dem Widerstand R1 den Ladekondensator C1 so lange auf, wie die am positiven Eingang von OP anliegende Ausgangsspannung des Verstärkers 37 ansteigt. Wenn die Spannung am positiven Eingang des Operationsverstärkers OP3 unter die Spannung am Ladekondensator C1 absinkt, so sperrt die Diode D1 und der Ladekondensator kann sich zunächst nicht weiter entladen. Das Maxima der Analogspannung bleibt am Ladekondensator C1 so lange gespeichert, bis die Analogspannung um einen bestimmten Betrag, beispielsweise bis auf die Hälfte, also ca. 0,7 Volt unter den gespeicherten Wert gesunken ist. Sodann wird die Diode D3 leitend und entlädt den Kondensator C1 in Abhängigkeit von der Amplitude der Analogspannung, so daß der Ladekondensator sich bei erneutem Ansteigen der Analogspannung wieder aufladen kann. In entsprechender Weise kann in der Speicherschaltung 34 über den Operator OP4, die Dioden D2 und D4 sowie den Ladekondensator C2 das Minimum der Wechselspannung erfaßt werden.

Die den Speicherschaltungen 32,33 über Impedanzwandler OP5, OP6 und mit dem anderen Eingang dem Verstärker 37 nachgeschalteten Differenzverstärker OP7 und OP8 bilden die Differenzen der gespeicherten Extrema zur momentan vorhandenen Spannung am Ausgang des Verstärkers 37. Das heißt, daß am Ausgang des Differenzverstärkers OP7 nur eine Spannung anliegt, wenn die Ausgangsspannung des Verstärkers 37 kleiner ist als das gespeicherte Maximum; entsprechend liefert OP8 nur eine Spannung, wenn die Analogspannung größer ist als das gespeicherte Minimum der Wechselspannung. Die Differenz der Spannungen an den Kondensatoren C1, C2 zur Ausgangsspannung des Verstärkers 37 ist im Diagramm 6.2 bzw. 6.3 angegeben, wie sich durch einen Vergleich mit Diagramm 6.1 ergibt.

Die beiden Ausgangsspannungen der Differenzverstärker OP7, OP8 und damit die in den Diagrammen 6.2 und 6.3 dargestellten Spannungen werden anschließend durch den Addierer OP9 zu einer Wechselspannung ohne Gleichspannungsanteil addiert (Diagramm 6.4).

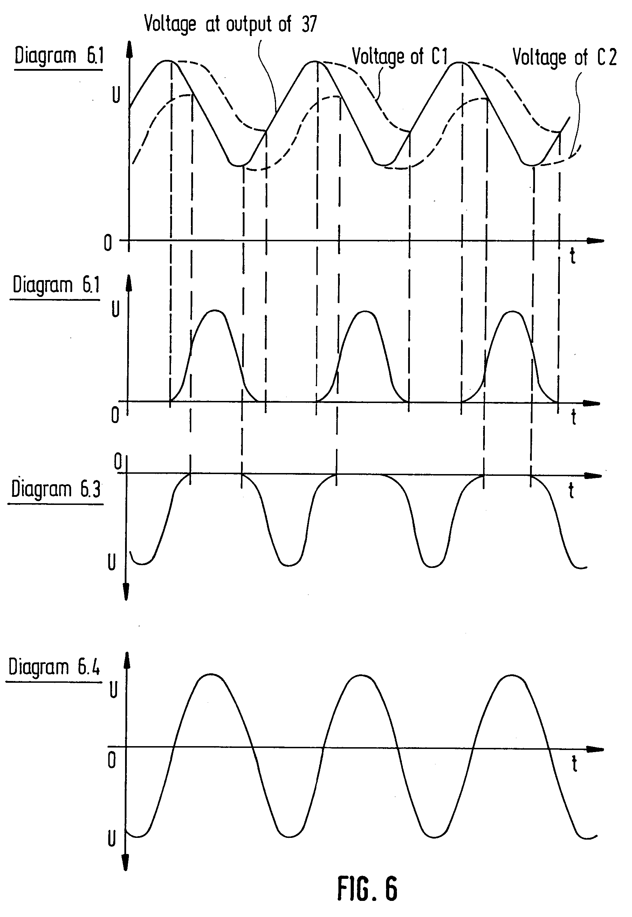

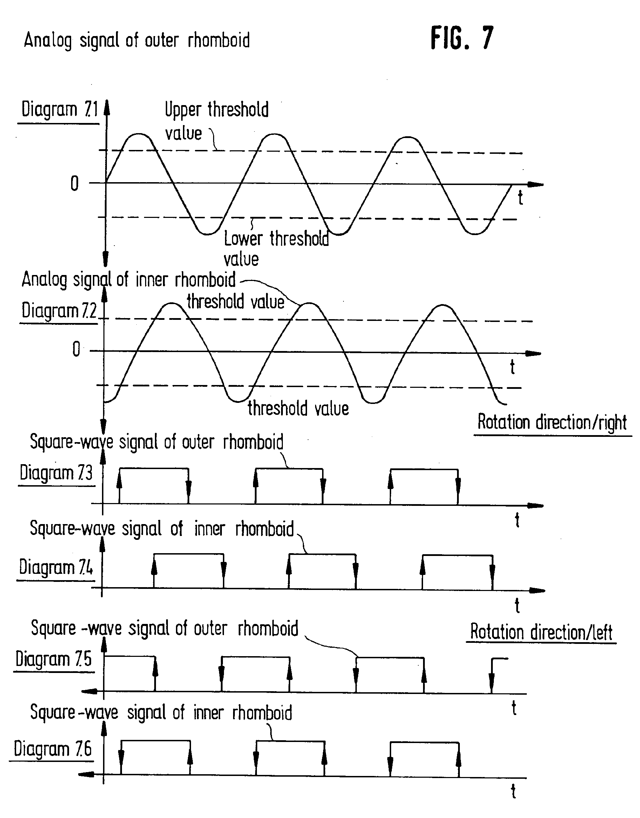

In der Figur 7 sind nun die Folgediagramme für die elektronisch abgeleitete Spannung bei einen 1/4-Strichabstand versetzten, zueinander koaxial angeordneten optischen Gittern dargestellt. Das Diagramm 7.1 nimmt das in Figur 6.4 dargestellte Ausgangssignal des Addieres OP9 für ein Strichgitter, beispielsweise das äußere Strichgitter, wieder auf, während das Diagramm 7.2 das entsprechende, um den Gleichspannungsanteil bereinigte Signal des entsprechenden inneren Überlagerungsbereichs zeigt. Diese Signale werden nun den Schmitttriggern OP10 zugeleitet, die, wenn ihr Eingangssignal ihren oberen Schwellwert überschreitet, ihren Ausgang öffnen und, wenn das Eingangssignal den unteren Schwellwert unterschreitet, schließen, um derart die in den Diagrammen 7.3 bis 7.4 dargestellten Rechtecksignale erzeugen.

Die Flankenwechsel der Rechteckimpulse sind ein Maß für die Anzahl der durchlaufenen Dunkel- und Hellzustände der Raute. Bei einem angenommenen Strichabstand von 0,2° beträgt somit die Auflösung aus dem Signal einer Raute 0,1°. Beim Hinzuziehen der Flankenwechsel der Rechteckimpulse aus der weiteren Raute erfolgt insgesamt alle 0,05° ein Flankenwechsel der Rechtecksignale. Dies entspricht damit einer Winkelauflösung von 0,05°.

Die Beziehung der Rechteckausgangssignale der äußeren und der inneren Raute zueinander geben eine eindeutige Aussage über die momentane Drehrichtung. Den Diagrammen 7.3 und 7.4 ist zu entnehmen, daß die Rechteckimpulse der äußeren Raute (Diagramm 7.3) der der inneren Raute (7.4) um 1/4 Periode vorlaufen.

Wird die Strichscheibe entgegengesetzt (also bei Drehrichtung 6 für die bisher besprochenen Diagramme, nach links) gedreht, so erreicht der Schmitt-Trigger OP10 für die innere Raute (Diagramm 7.10) seinen Schaltpunkt 1/4 Periode vor dem Schmitttrigger für die äußere Raute. In gleicher Weise läuft die Abflanke des Schmitt-Triggers für die innere Raute der Abflanke für die äußere Raute vor. Den Ausgängen der Operatoren OP10 für innere und äußere Raute kann demgemäß eine logische Schaltung zur Bestimmung der Drehrichtung nachgeordnet werden, wie sie an sich bekannt ist.

In Fig.8 ist dargestellt, wie sich bei konzentrisch angeordneten, winkelmäßig zueinander versetzten Strichgittern 4 auf einer Scheibe 2 durch Überlagerung mit dem Strichgitter 3 der anderen Scheibe (nicht dargestellt; Fig.1) beidseits der Trennlinie der Strichgitter 4 jeweils Halbrauten bilden, von denen eine in der Überlagerungsstellung mit der anderen Scheibe ein dunkles Feld zeigt (die obere in Fig.8), während bei der weiteren das Zentrum hell ist. Insbesondere bei beengten Raumverhältnissen müssen beide Halbrauten nahe der Trennlinie durch zwei Detektoren diskret beobachtet werden. Um dies auch bei kleinen Abmessungen zu ermöglichen ordnet man diese vor den Scheiben 1,2 beidseits der Trennlinie zwischen den Strichmustern 4 mit ihren einen Stirnseiten an, die dann zu zwei Detektoren 24 geführt sind, die derart einen größeren Abstand aufweisen können. Hierdurch kann eine diskrete Detektion beider Halbrauten (wie in Fig.8 dargestellt) vorgenommen werden.

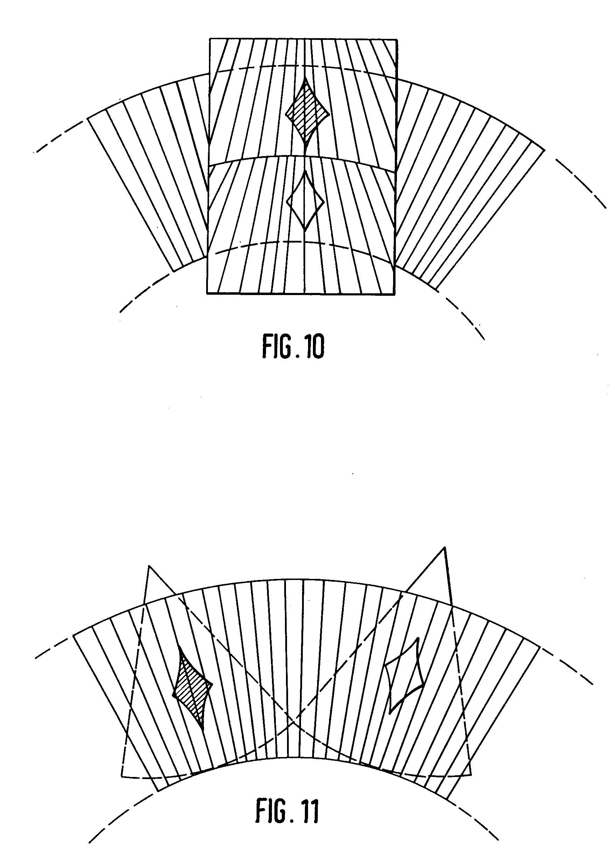

Statt einer konzentrischen Anordnung der optischen Strichgitter auf einer Scheibe mit gemeinsamem Zentrum und winkelmäßigem Versatz können auch zwei Strichgitter auf einer Scheibe übereinander mit radial zueinander versetzten Mittelpunkten vorgesehen werden, wie dies in der Fig.10 angedeutet ist. In gleicher Weise können auf einer Scheibe zwei Strichgitter vorgesehen werden, deren Mittelpunkte angular zueinander versetzt sind (Fig.11).

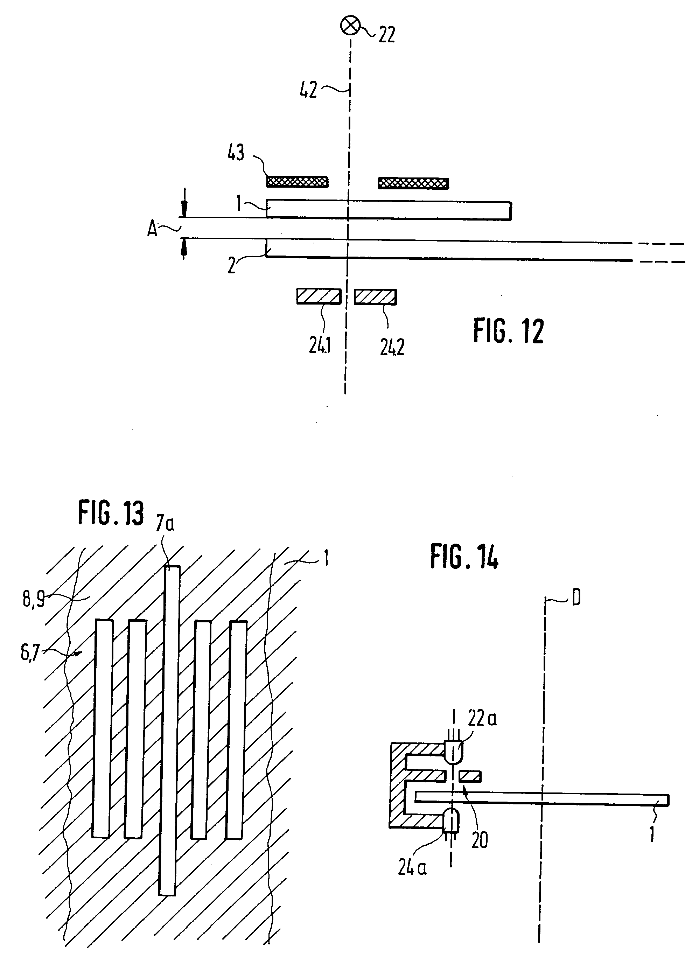

Eine andere Ausgestaltung des Verfahrens, das bei jeweils einem optischen Strichgitter auf jeder der zueinander verdrehbaren Scheiben ebenfalls die Drehwinkelrichtung zu bestimmen gestattet, ist in der Fig.12 dargestellt. Hierbei werden die beiden Scheiben 1,2 mit einem endlichen senkrechten Abstand A zueinander angeordnet. Der Abstand kann allerdings sehr gering sein und im Zehntel-Millimeter-Bereich liegen; ein bevorzugter Abstand liegt bei 0,25 mm. Hier sind auf der der Lichtquelle 22 gegenüberliegenden Seite der beiden Scheiben 1,2 zwei Empfänger 24.1 und 24.2 relativ zur optischen Achse 42, die das Lot von der Lichtquelle 22 auf die Scheiben 1,2 bildet, versetzt angeordnet. Beide Empfänger beobachten aber aus ihren unterschiedlichen Positionen das Bild der vor den Scheiben 1,2 angeordneten Blende 43. Durch die hierdurch gegebene Parallaxe zwischen beiden Detektoren 24.1, 24.2 sehen diese unterschiedliche Helligkeitszustände. Die von ihnen abgegebenen elektrischen Signale weise ebenfalls Unterschiede in ihrer Amplitude auf, was auf eine Phasenverschiebung der beiden Signale zueinander zurückzuführen ist. Die Größe der Phasenverschiebung läßt sich über die Stellung der Empfängerelemente bestimmen und ist über den gesamten Drehbereich des Drehwinkelgebers konstant. Alternativ hierzu können zur Durchleuchtung der Strichscheiben auch zwei Lichtquellen, beispielsweise nebeneinander angeordnete LEDs verwendet werden, wobei jede LED das Strichmuster in einem anderen Winkel durchstrahlt und dann von dem gegenüberliegenden Empfänger oder jeweils dem entsprechenden gegenüberliegenden Empfänger detektiert wird. Wenn nur ein Empfänger verwendet wird, so dürfen die Lichtquellen selbstverständlich lediglich wechselnd aufleuchten, wobei die Signalverarbeitung dann im Multiplex-Verfahren erfolgt; auch wenn zwei Empfänger verwendet werden, muß in geeigneter Weise eine Signaltrennung vorgenommen werden.

Wie oben im einzelnen erläutert wurde, befinden sich auf den geschwärzten (bei 8,9) Scheiben 1,2 lichtdurchlässige Lücken 6,7, die radial zur Scheibenmitte angeordnet (z.B. Fig.8,10,11) sind. Die Strichstruktur 6,7 erstreckt sich allerdings nicht bis zum Rand und zum Mittelpunkt der Scheibe, so daß diese Bereiche lichtundurchlässig sind. Um eine Absolutmarke auf der Scheibe zu bekommen - um so einen Inkrementalzähler zu setzen - ist bei der Ausgestaltung der Fig.13 eine Lücke 7a zum Mittelpunkt oder zum Scheibenrand hin verlängert.

Die Detektion dieser verlängerten Lücke 7a erfolgt mittels einer IR-Sendediode und eines lichtempfindlichen Elements 24a. Vor dem Lichtempfänger 24a befindet sich eine Kreisblende 20 mit dem Durchmesser d, der der Lückenbreite entspricht. Alle drei Elemente Sendediode 22a, Empfangselement 24a und Lochblende 20 sind mechanisch miteinander verbunden und können somit an jedem Punkt am Kreisumfang der Strichscheibe angebracht werden (Fig.14).

Die Kreisblende bietet gegenüber einer Schlitzblende den Vorteil, daß sie nicht zu den radial verlaufenden Lücken 6,7 auf der Scheibe 1,2 justiert werden muß.

Diese Weiterbildung zur Festlegung eines Nullpunktes kann bei sämtlichen vorstehenden Ausgestaltungen eingesetzt werden, erfordert aber eine zusätzliche Lichtschranke 24a.

Eine Absolutmarkendetektion ohne zusätzliche Lichtschranke kann bei der Ausgestaltung der Fig.12 auch folgendermaßen erreicht werden: Durch die Anordnung der beiden Fotoelemente 24. 1 und 24.2 über der zu detektierenden Rautenfigur (Fig.12) erhält man wegen der bestehenden Paralaxe zwei Analogsignale, die eine Phasenverschiebung von 90 Grad gegeneinander aufweisen (bei A), solange die ungestörten Strichmuster sich an den Empfängern 24.1 und 24.2 vorbeibewegen.

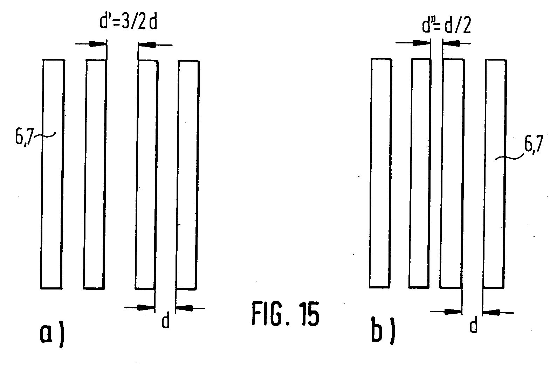

Durch Verändern der Strich- und Lückenabstände d, d', d'' auf der Scheibe 1,2 kann man erreichen, daß die durch die Parallaxe entstehende Phasenverschiebung der Analogsignale zueinander aufgehoben wird. Zu diesem Zweck wird die Strichstruktur 6,7 entsprechend geändert (Fig.15), also entweder eine Lücke verbreitert oder verkleinert.

Wird der geänderte Bereich der Strichstruktur 6,7 auf der Scheibe 1,2 von einem der Fotoelemente erfaßt, so haben die Analogsignale keine Phasenverschiebung mehr zueinander.Die Veränderung der Phasenlage zueinander geschieht allmählich.

Benützt man an Stelle der Fotoelemente 24 Detektoren mit Glasfaserpigtails 41, so geschieht die Veränderung der Phasenlage innerhalb weniger Signalperioden. Auch zeigen die Analogsignale eine starke Einschnürung ihres Amplitudenverlaufes.

Mit einer geeigneten elektronischen Auswerteschaltung läßt sich eine exakte Marke auf der Scheibe über die Phasenlage oder über den Amplitudenverlauf bestimmen.

Das oben beschriebene Verfahren bietet den Vorteil, daß es keine zusätzlichen Sende- und Empfangselemente zur Detektion einer Marke auf der Strichscheibe benötigt, und mit den bereits vorhandenen Empfängern auskommt.

## Patentansprüche

1. Verfahren zum Messen eines Drehwinkels, wobei mindestens ein zu seiner Drehachse radiales erstes optisches Gitter (2,7) relativ zu einem parallel zu diesem angeordneten stationären weiteren optischen Gitter (1,6) verschwenkt wird und wobei durch diese in einem Überlappungsbereich derselben hindurchtretendes Licht detektiert wird, dadurch gekennzeichnet, daß die Zentren der beiden optischen Gitter auf gegenüberliegenden Seiten des Überlappungsbereiches liegen.

2. Verfahren nach Anspruch 1, dadurch gekennzeichnet, daß ein auf der Verbindungsachse der beiden Zentren der Gitter liegender Teil des Überlappungsbereiches durch mindestens einen Fotoempfänger (24) beobachtet wird.

3. Verfahren nach Anspruch 2, dadurch gekennzeichnet, daß elektrische Ausgangssignale des oder der Fotoempfänger(s) digitalisiert werden.

4. Verfahren nach Anspruch 3, dadurch gekennzeichnet, daß die empfangenen Digitalimpulse bis zur Endstellung der zu messenden Drehbewegung aufaddiert werden.

5. Verfahren nach Anspruch 3 oder 4, dadurch gekennzeichnet, daß die Digitalimpulse durch die Spitzenwerte der Ausgangssignale der Fotoempfänger (24) erzeugt werden.

6. Verfahren nach einem der Ansprüche 2 bis 5, dadurch gekennzeichnet, daß Digitalimpulse durch definierte Werte des Ausgangssiganls des Fotoempfänger (24) feststellende Schmitt-Trigger (38) erzeugt werden.

7. Verfahren nach einem der Ansprüche 1 bis 6, dadurch gekennzeichnet, daß ein zusätzliches zum ersten der Gitter koaxiales Gitter, das zu dem genannten Gitter versetzt ist, synchron mit diesem ersten Gitter relativ zum weiteren Gitter verschwenkt wird.

8. Verfahren nach Anspruch 7, dadurch gekennzeichnet, daß das zusätzliche Gitter um ein Viertel Strichabstand relativ zum mit ihm koaxialen Gitter vor- bzw. nachgeführt wird.

9. Verfahren nach einem der Ansprüche 1 bis 6, dadurch gekennzeichnet, daß die beiden mit Abstand zueinander angeordneten optischen Strichgitter in ihren Überlappungsbereichen mit dem weiteren Gitter in unterschiedlichen Richtungen betrachtet werden.

10. Drehwinkelmesser, mit mindestens zwei optischen Gittern (1, 6; 2, 7), von denen ein erstes, strahlenförmiges, (2, 7) um eine durch sein Zentrum verlaufende Drehachse relativ zum anderen, zur Ebene des ersten Gitters parallelen Gitter (1, 6) verschwenkbar ist und wobei die Winkelstellung des ersten optischen Gitters (2, 7) gemessen werden soll, und mit mindestens einer Lichtquelle (22) und mindestens einem Fotodetektor (24), wobei Licht der Lichtquelle durch einen Überlappungsbereich beider Gitter (1, 6; 2, 7) zum Detektor gelangt, dadurch gekennzeichnet, daß die Zentren (13, 14) der beiden optischen Gitter (1, 6; 2, 7) auf gegenüberliegenden Seiten des Überlappungsbereichs liegen.

11. Drehwinkelmesser nach Anspruch 10, dadurch gekennzeichnet, daß die optischen Gitter (6, 7) identisch ausgebildet sind.

12. Drehwinkelmesser nach Anspruch 10 oder 11, dadurch gekennzeichnet, daß über dem Überlappungsbereich (21) der beiden optischen Gitter (6,7) eine Blende (23) angeordnet ist.

13. Drehwinkelmesser nach einem der Ansprüche 1 bis 12, dadurch gekennzeichnet, daß dem bzw. den Fotoempfänger(n) eine Auswerteelektronik nachgeordnet ist.

14. Drehwinkelmesser nach Anspruch 13, dadurch gekennzeichnet, daß die Auswerteelektronik eine Einrichtung zur Ableitung von Digitalsignalen vom Ausgangssignal des bzw. der Fotoempfänger(s) (24) aufweist.

15. Drehwinkelmesser nach Anspruch 14, dadurch gekennzeichnet, daß dem bzw. den Fotoempfänger(n) (24) Speicherschaltungen nachgeordnet sind.

16. Drehwinkelmesser nach einem der Ansprüche 10 bis 15, gekennzeichnet durch Mittel zur Erfassung der positiven und negativen Maxima des Ausgangssignals des Fotoempfängers bzw. der Fotoempfänger und durch einen nachgeordneten Differenzverstärker zur Differenzbildung zwischen Ausgangssignal der Halteschaltung und I/U-gewandeltem Ausgangssignal des Fotoempfängers (24).

17. Drehwinkelmesser nach einem der Ansprüche 10 bis 16, dadurch gekennzeichnet, daß mit einem der optischen Gitter ein weiteres optisches Gitter vorhanden ist, das koaxial zu diesen angeordnet, aber relativ zu diesem winkelmäßig versetzt ist.

18. Drehwinkelmesser nach Anspruch 17, dadurch gekennzeichnet, daß die beiden koaxialen Strichgitter um 1/4 Strichabstand zueinander versetzt sind.

19. Drehwinkelmesser nach einem der Ansprüche 10 bis 18, dadurch gekennzeichnet, daß die Gitter (3,4) mit senkrechtem Abstand (A) zueinander angeordnet sind und daß mindestens zwei Empfänger oder zwei Sender vorgesehen sind, von denen beiden jeweils mindestens einer zu einer optischen Achse versetzt angeordnet ist.

20. Drehwinkelmesser nach Anspruch 19, dadurch gekennzeichnet, daß der Relativabstand der Gitter (3,4) im Zehntel-Millimeter-Bereich liegt.

21. Drehwinkelmesser nach einem der Ansprüche 10 bis 20, dadurch gekennzeichnet, daß die optischen Strichmarkierungen (3,4) auf Glasträgern ausgebildet sind.

## Claims

1. Method for measuring a rotation angle, in which at least one first optical grating (2, 7) which is radial to its rotation axis is pivoted relative to a stationary, further optical grating (1, 6) arranged parallel thereto and in which light passing through the latter is detected in an overlap area, characterized in that the centres of the two optical gratings are located on opposite sides of the overlap area.

2. Method according to claim 1, characterized in that a part of the overlap area located on the connecting axis of the two centres of the gratings is observed by at least one photodetector (24).

3. Method according to claim 2, characterized in that electric output signals of the photodetector or photodetectors are digitized.

4. Method according to claim 3, characterized in that the received digital pulses are summated up to the end position of the rotary movement to be measured.

5. Method according to claim 3 or 4, characterized in that the digital pulses are produced by the peak values of the output signals of the photodetectors (24).

6. Method according to one of the claims 2 to 5, characterized in that digital pulses are produced by Schmitt triggers (38) establishing clearly defined values of the output signal of the photodetectors (24).

7. Method according to one of the claims 1 to 6, characterized in that an additional grating coaxial to the first of the gratings and which is displaced with respect to said grating is pivoted in synchronous manner with said first grating relative to the further grating.

8. Method according to claim 7, characterized in that the additional grating leads or follows by a 1/4 line spacing relative to the grating coaxial thereto.

9. Method according to one of the claims 1 to 6, characterized in that the two spaced optical groove gratings are observed in their overlap areas with the further grating in different directions.

10. Rotation angle measuring device with at least two optical gratings (1, 6; 2, 7), whereof a first (2, 7) is pivotable in beam-like manner about a rotation axis passing through its centre relative to the other grating (1, 6) which is parallel to the plane of the first grating and in which the angular position of the first optical grating (2, 7) is to be measured and with at least one light source (22) and at least one photodetector (24), the light of the light source passing through an overlap area of the two gratings (1, 6; 2, 7) to the detector, characterized in that the centres (13, 14) of the two optical gratings (1, 6; 2, 7) are located on opposite sides of the overlap area.

11. Rotation angle measuring device according to claim 10, characterized in that the optical gratings (6, 7) are identical.

12. Rotation angle measuring device according to claim 10 or 11, characterized in that a diaphragm (23) is placed aver the overlap area (21) of the two optical gratings (6, 7) .

13. Rotation angle measuring device according to one of the claims 1 to 12, characterized in that an evaluation electronics follows the photodetector or photodetectors.

14. Rotation angle measuring device according to claim 13, characterized in that the evaluation electronics has a device for deriving digital signals from the output signal of the photodetector or photodetectors (24).

15. Rotation angle measuring device according to claim 14, characterized in that storage circuits follow the photodetector or photodetectors (24).

16. Rotation angle measuring device according to one of the claims 10 to 15, characterized by means for determining the positive and negative maxima of the output signal of the photodetector or photodetectors and by a following differential amplifier for forming the difference between the output signal of the sample and hold circuit and the I/U-converted output signal of the photodetector (24).

17. Rotation angle measuring device according to one of the claims 10 to 16, characterized in that a further optical grating is positioned coaxially to the optical grating and is angularly displaced relative thereto.

18. Rotation angle measuring device according to claim 17, characterized in that the two groove gratings are reciprocally displaced by a 1/4 line spacing.

19. Rotation angle measuring device according to one of the claims 10 to 18, characterized in that the gratings (3, 4) are arranged with a vertical spacing (A) to one another and in that at least two receivers or two transmitters are provided, whereof both are in each case displaced with respect to at least one optical axis.

20. Rotation angle measuring device according to claim 19, characterized in that the relative spacing of the gratings (3, 4) is in the 1/10 mm range.

21. Rotation angle measuring device according to one of the claims 10 to 20, characterized in that the optical line markings (3, 4) are formed on glass supports.

## Revendications

1. Méthode pour la mesure d'un angle de rotation selon laquelle on fait pivoter au moins un premier réseau de diffraction (2,7), disposé radialement à son axe de pivotement, par rapport à un autre réseau de diffraction (1,6) stationnaire, disposé parallèlement au premier, et selon laquelle on détecte la lumière traversant ces réseaux dans une zone de recouvrement de ces derniers, caractérisée en ce que les centres des deux réseaux de diffraction sont situés sur des côtés opposés de la zone de recouvrement.

2. Méthode selon la revendication 1, caractérisée en ce que l'on observe une partie de la zone de recouvrement située sur l'axe de liaison des deux centres des réseaux au moyen d'au moins un photorécepteur (24).

3. Méthode selon la revendication 2, caractérisée en ce que l'on numérise des signaux électriques de sortie du ou des photorécepteurs.

4. Méthode selon la revendication 3, caractérisée en ce que l'on additionne les impulsions numériques reçues jusqu'à la position finale du mouvement de rotation à mesurer.

5. Méthode selon l'une des revendications 3 ou 4, caractérisée en ce que l'on génère les impulsions numériques à partir des valeurs de crête des signaux de sortie des photorécepteurs (24).

6. Méthode selon l'une des revendications 2 à 5, caractérisée en ce que l'on produit des impulsions numériques par des bascules de Schmitt fixant des valeurs définies du signal de sortie des photorécepteurs (24).

7. Méthode selon l'une des revendications 1 à 6, caractérisée en ce que l'on fait pivoter un réseau supplémentaire, coaxial au premier réseau et décalé par rapport à celui-ci, de manière synchrone avec ledit réseau par rapport à l'autre réseau.

8. Méthode selon la revendication 7, caractérisée en ce que l'on fait précéder ou suivre le réseau supplémentaire d'un quart de l'écartement entre les stries par rapport au réseau qui lui est coaxial.

9. Méthode selon l'une des revendications 1 à 6, caractérisée en ce que l'on observe les deux réseaux de diffraction disposés écartés l'un de l'autre dans leurs zones de recouvrement avec l'autre réseau selon des directions différentes.

10. Dispositif de mesure d'un angle de rotation comprenant au moins deux réseaux de diffraction (1,6;2,7) dont un premier en forme de faisceau peut être pivoté autour d'un axe de rotation passant en son centre par rapport à l'autre réseau qui est parallèle au plan du premier, la position angulaire du premier réseau (2,7) devant être mesurée, et comprenant au moins une source de lumière (22) et au moins un photorécepteur (24), la lumière émise par la source de lumière parvenant au détecteur à travers une zone de recouvrement des deux réseaux (1,6;2,7), caractérisé en ce que les centres (13,14) des deux réseaux de diffraction (1,6;2,7) sont situés sur des côtés opposés de la zone de recouvrement.

11. Dispositif selon la revendication 10, caractérisé en ce que les réseaux de diffraction (6,7) sont de conformation identique.

12. Dispositif selon l'une des revendications 10 ou 11, caractérisé en ce qu'un diaphragme (23) est disposé sur la zone de recouvrement (21) des deux réseaux de diffraction (6,7).

13. Dispositif selon l'une des revendications 1 à 12, caractérisé en ce qu'une électronique d'exploitation est disposée à la suite du ou des photorécepteurs.

14. Dispositif selon la revendication 13, caractérisé en ce que l'électronique d'exploitation comprend un ensemble de transformation du signal de sortie du ou des photorécepteurs (24) en signaux numériques.

15. Dispositif selon la revendication 14, caractérisé en ce que des commutations mémoire sont disposées à la suite du ou des photorécepteurs (24).

16. Dispositif selon l'une des revendications 10 à 15, caractérisé par un moyen de détection des maxima positif et négatif du signal de sortie du ou des photorécepteurs et par un amplificateur différentiel disposé à la suite pour former une différence entre le signal de sortie de la commutation d'arrêt et le signal de sortie du photorécepteur (24) après transformation courant/tension.

17. Dispositif selon l'une des revendications 10 à 16, caractérisé en ce qu'un autre réseau de diffraction est prévu associé et coaxial à l'un des réseaux de diffraction, mais décalé angulairement par rapport à celui-ci.

18. Dispositif selon la revendication 17, caractérisé en ce que les deux réseaux à stries coaxiaux sont décalés l'un par rapport à l'autre d'un quart de l'écartement entre les stries.

19. Dispositif selon l'une des revendications 10 à 18, caractérisé en ce que les réseaux (3,4) sont disposés avec un écartement vertical (A) l'un par rapport à l'autre et en ce qu'il est prévu au moins deux récepteurs ou deux émetteurs, dont un au moins de chaque paire est disposé de façon décalée par rapport à un axe optique.

20. Dispositif selon la revendication 19, caractérisé en ce que l'écartement relatif des réseaux (3,4) est de l'ordre du dixième de millimètre.

21. Dispositif selon l'une des revendications 10 à 20, caractérisé en ce que les marques optiques en stries (3,4) sont réalisées sur des supports en verre.
